Europäisches Patentamt

European Patent Office

Office européen des brevets

(19)

(11) Veröffentlichungsnummer: **0 092 071**
**B1**

(12) **EUROPÄISCHE PATENTSCHRIFT**

(45) Veröffentlichungstag der Patentschrift:
**16.07.86**

(21) Anmeldenummer: **83103073.9**

(22) Anmeldetag: **28.03.83**

(51) Int. Cl.⁴: **H 04 B 17/02**

(54) Betriebsüberwachung von Übertragungsstrecken für digitale Signale.

(30) Priorität: **31.03.82 DE 3211977**

(43) Veröffentlichungstag der Anmeldung:
**26.10.83 Patentblatt 83/43**

(45) Bekanntmachung des Hinweises auf die Patenterteilung:
**16.07.86 Patentblatt 86/29**

(84) Benannte Vertragsstaaten:
**AT BE CH DE FR GB IT LI LU NL SE**

(56) Entgegenhaltungen:
**EP - A - 0 018 295**
**EP - A - 0 033 470**
**EP - A - 0 044 556**

(73) Patentinhaber: **Siemens Aktiengesellschaft, Berlin und München Wittelsbacherplatz 2, D-8000 München 2 (DE)**

(72) Erfinder: **Keil, Heinrich, Dipl.-Ing., Beltweg 3, D-8000 München 40 (DE)**
Erfinder: **Dömer, Josef, Flossgatter 18, D-8021 Hohenschäftlarn (DE)**

## Beschreibung

Die Erfindung betrifft ein Verfahren zur Betriebsüberwachung von Übertragungsstrecken für digitale Signale mit wenigstens einem, zwischen zwei Leitungsendgeräten angeordneten überwachenden Zwischenregenerator, der eine Fehlerüberwachungseinrichtung für das übertragene digitale Signal und einen daran angeschlossenen Telemetriesignalregenerator zur Erzeugung eines die Überwachungsinformation zu einer Endstelle übertragenden Telemetriesignals enthält, bei dem die Telemetriesignale in einer anderen Frequenzlage als das digitale Signal in dessen Signalweg mitübertragen, in den Zwischenregeneratoren aber getrennt davon regeneriert und verstärkt werden, bei dem die Telemetriesignale von den einzelnen überwachenden Zwischengeneratoren zyklisch aufeinanderfolgend abgegeben werden und die Aussendung jedes anschliessenden Telemetriesignals durch den Empfang des Telemetriesignals des vorhergehenden Zwischenregenerators ausgelöst wird und das bei Ausfall der Telemetriesignalübertragung der eine vorbestimmte Zeit kein Telemetriesignal empfangende Zwischenregenerator mit der Aussendung eines, eine Zusatzinformation enthaltenden Telemetriesignals beginnt, und eine Anordnung zur Durchführung des Verfahrens.

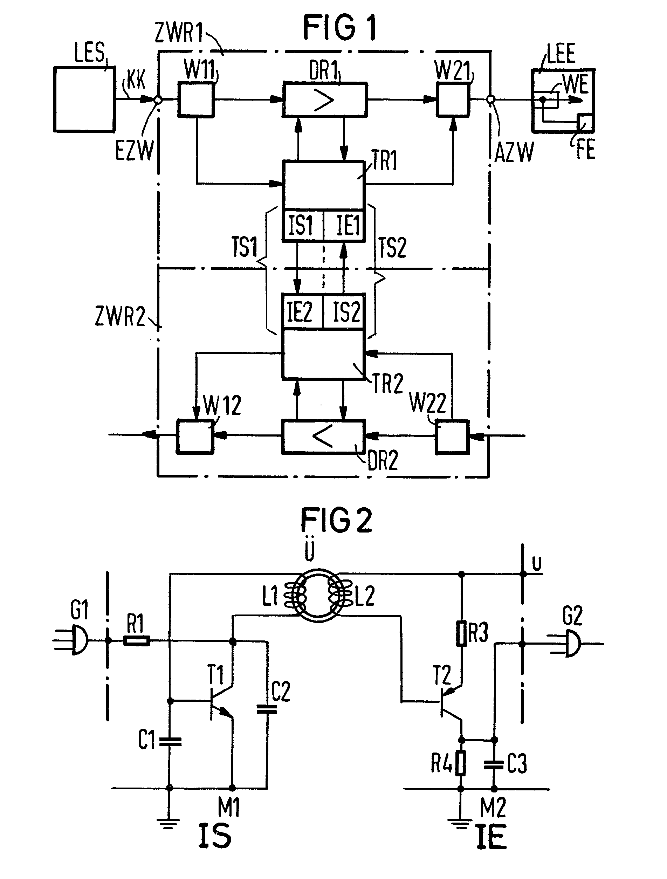

Aus der DE-OS 30 27 755 ist ein Verfahren der vorstehend angeführten Art und ein Zwischengenerator zur Durchführung des Verfahrens bekannt. Es wird dazu ausgegangen von einem digitalen Übertragungssystem, bei dem zwischen zwei Leitungsendgeräten eine Anzahl von Zwischengeneratoren für das digitale Signal vorgesehen sind, die ausserdem Überwachungseinrichtungen für das digitale Signal enthalten. Das Ergebnis der Überwachung wird dabei in Form eines Telemetriesignals von dem überwachenden Zwischenregenerator im selben Signalweg wie das digitale Signal, jedoch in einer anderen Frequenzlage, zum nächsten Zwischenregenerator übertragen. Zur Erläuterung dieses Standes der Technik sei auf die Fig. 1 verwiesen, die diesen Stand der Technik mit enthält.

In der Fig. 1 ist ein sendendes Leitungsendgerät LES und ein empfangendes Leitungsendgerät LEE dargestellt, zwischen denen sich eine Übertragungsleitung in Form eines Koaxialkabels KK befindet und das durch einen ersten Zwischenregenerator ZWR1 in zwei Abschnitte unterteilt ist. Mit dem Eingang EZW des ersten Zwischenregenerators ist eine erste Frequenzweiche W11 verbunden, die Digitalsignal und Telemetriesignal voneinander trennt und das Digitalsignal an den Eingang eines Digitalsignal-Regenerators DR1 abgibt, während das Telemetriesignal an den Eingang eines Telemetriesignal-Regenerators TR1 abgegeben wird. Nach der Regenerierung und Verstärkung beider Signale werden diese von den entsprechenden Regeneratoren DR1 bzw. TR1 an die Eingänge einer zweiten Frequenzweiche W21 abgegeben, die ein erneutes Übertragungssignal erzeugt und dieses über den Ausgang AZW des ersten Zwischenregenerators ZWR1 an das weiterführende Koaxialkabel abgibt. In der Zwischenstelle ist ein entsprechend gebauter Zwischenregenerator ZWR2 für die Gegenrichtung enthalten, der entsprechend zwei weitere Frequenzweichen W12 bzw. W22, einen zweiten Digitalsignal-Regenerator DR2 und einen zweiten Telemetriesignal-Regenerator TR2 enthält.

In den Telemetriesignal-Regeneratoren TR1 bzw. TR2 erfolgt nicht nur die Regenerierung und Verstärkung des Telemetriesignals, sondern auch die Einfügung des jeweils örtlich erzeugten Telemetriesignals. Zur Überwachung der übertragenden digitalen Signale enthält der Digitalsignal-Regenerator DR1 bzw. DR2 eine entsprechende Einrichtung, die beispielsweise mittels Coderegelüberwachung oder Überwachung der digitalen Summe Übertragungsfehler feststellt und eine entsprechende Fehlermeldung an den angeschlossenen Telemetriesignal-Regenerator TR1 bzw. TR2 abgibt. Von diesem kann ausserdem ein Testsignal an den Digitalsignal-Regenerator DR1 bzw. DR2 abgegeben werden, um die angeschlossenen Überwachungseinrichtungen überprüfen zu können.

Die Telemetriesignal-Regeneratoren TR1 bzw. TR2 sind so aufgebaut, dass sie, falls sie für eine bestimmte Zeit kein Telemetriesignal empfangen, ihr eigenes Telemetriesignal erzeugen und dieses an den nächsten Zwischenregenerator der gleichen Übertragungsrichtung weitersenden. Nach dem Einschalten der Übertragungsstrecke beginnen dann zwar zunächst alle Telemetriesignal-Regeneratoren jeder der beiden Übertragungsrichtungen mit der Aussendung. Sobald aber die nachgeschalteten Telemetriesignal-Regeneratoren das Telemetriesignal des vorhergehenden Telemetriesignal-Regenerators empfangen, unterbrechen sie ihre Aussendung und übertragen dieses. Der erste Telemetriesignal-Regenerator überträgt daraufhin ungestört sein Telemetriesignal zusammen mit einer Zusatzinformation, die einen Hinweis darauf enthält, dass dieser betreffende Zwischenregenerator kein Telemetriesignal empfängt und daraufhin den Zyklus für die Aussendung des Telemetriesignals gestartet hat. Dieser Startvorgang erfolgt auch bei einer Störung der Telemetriesignalübertragung, wobei in diesem Falle nicht der auf das sendende Leitungsendgerät LES folgende Zwischenregenerator, sondern der auf den Fehlerort folgende Zwischenregenerator kein Telemetriesignal empfängt und deshalb als Starter für einen neuen Telemetriezyklus dient. Die Telemetrieinformationen werden zusammen mit der Zusatzinformation in dem empfangenden Leitungsendgerät LEE mittels einer Empfangsweiche WE vom digitalen Signal abgekoppelt und einer Fehlererkennungsschaltung FE zugeführt. Durch die Information über den jeweils startenden Zwischenregenerator ist bei Unterbrechungen im Leitungsweg eine Lokalisierung des Fehlerortes leicht möglich. Anstelle der Auswertung im empfangenden Leitungsendgerät LEE für die eine Übertragungsrichtung kann das Telemetriesignal auch zum sendenden Leitungsendgerät für die andere Übertragungsrichtung weitergeleitet werden und über die Gegenrichtung mitübertragen werden.

Das vorstehend beschriebene Verfahren ist auch aus der EP-AI-0044556 bekannt. Eine Schaltungsanordnung zur Bildung eines Schleifenschlusses in einem Zwischenregenerator eines PCM-Systems ist aus der EP-AI-0033470 bekannt. Bei dieser Schaltungsanordnung wird das Signal zur Steuerung des im Zwischenregenerator der Gegenrichtung angeordneten Schleifenschlussschalters mittels eines Steuerfrequenzoszillators mit nachgeschaltetem hochspannungsfesten Steuerfrequenz-Übertragers über die Potentialtrennstelle zwischen beiden Regeneratoren übertragen.

Bei der Übertragung der Zusatzinformation mit dem Startersignal über den gesamten weiteren Telemetriesignalweg besteht die Gefahr, dass durch weitere Störungen die Zusatzinformation verlorengeht oder zumindest verstümmelt wird und damit die wichtige Information über den Ort des jeweils startenden Telemetriesignal-Regenerators nicht mehr erkenntlich ist.

Die Aufgabe der Erfindung besteht also darin, ein Verfahren der eingangs erwähnten Art so weiterzubilden, dass eine hohe Sicherheit bei der Übertragung der Zusatzinformation mit dem Startersignal zu einer auswertenden Stelle erreicht wird.

Erfindungsgemäss wird die Aufgabe bei einem Verfahren der eingangs genannten Art durch die im kennzeichnenden Teil des Anspruchs 1 angegebenen Merkmale gelöst.

Zur Verringerung der Zykluszeit, insbesondere bei längeren Übertragungsstrecken mit vielen Zwischenregeneratoren, kann eine Variante des erfindungsgemässen Verfahrens zweckmässig sein, bei der nur derjenige Teil des Telemetriesignals, der nicht in den Telemetriesignalweg der Gegenrichtung eingesperrt wurde, im Telemetriesignalweg der ursprünglichen Übertragungsrichtung vollständig übertragen wird.

Weitere zweckmässige Ausbildungen des erfindungsgemässen Verfahrens sowie eine Anordnung zur Durchführung des erfindungsgemässen Verfahrens sind in den Patentansprüchen 4 bis 9 näher beschrieben.

Die Erfindung soll im folgenden anhand der Zeichnung näher erläutert werden. In der Zeichnung zeigt

Fig. 1 das Prinzipschaltbild einer Übertragungsstrecke eines Übertragunssystems für digitale Signale mit einer zusätzlichen Koppeleinrichtung nach der Erfindung und

Fig. 2 die Schaltung der in der Fig. 1 verwendeten Koppeleinrichtung.

Die Prinzipschaltung nach der Fig. 1 ist bei der Erläuterung des Standes der Technik bereits ausführlich beschrieben worden, neu in dieser Prinzipschaltung ist aber der Einsatz zweier Telemetrie-Signalkoppler TS1 bzw. TS2. Diese Telemetrie-Signalkoppler enthalten jeweils einen Sendeteil IS1, IS2 und einen Empfangsteil IE1 bzw. IE2. Dabei ist der Sendeteil IS1 im Telemetriesignal-Regenerator TR1 des ersten Zwischenregenerators enthalten und an diesen angekoppelt ist der Empfangsteil IE2, der im zweiten Telemetriesignal-Regenerator TR2 im Zwischenregenerator ZWR2 für die Gegenrichtung enthalten ist. Entsprechend ist der Sendeteil IS2 im Telemetriesignal-Regenerator TR2 enthalten und mit dem Empfangsteil IE1 im Telemetriesignal-Regenerator TR1 gekoppelt. Durch die Telemetrie-Signalkoppler wird die Zusatzinformation zum eigentlichen Telemetriesignal von dem Telemetriesignal-Regenerator der einen Übertragungsrichtung zu dem der anderen Übertragungsrichtung übertragen und vom empfangenden Telemetriesignal-Regenerator in den Telemetriesignalweg der Gegenrichtung eingekoppelt und zur entsprechenden auswertenden Endstelle übertragen. Durch den symmetrischen Aufbau mit zwei Telemetrie-Signalkopplern wird erreicht, dass eine Betriebsüberwachung für die digitale Übertragungsstrecke an beiden Leitungsenden möglich ist. Neben der universellen Verwendbarkeit ergibt sich für eine Reihe von Fehlern die Möglichkeit, diese durch Auswertung an beiden Streckenenden genauer festzustellen zu können und ausserdem, zumindest bei einer Reihe von Fehlern, durch Kombination beider Aussagen auch den Fehlerort genauer feststellen zu können.

Die beiden Telemetrie-Signalkoppler TS1, TS2 haben bei gleicher Funktion auch gleichen Aufbau, der in der Fig. 2 näher dargestellt ist. Die Funktion der Telemetrie-Signalkoppler besteht im Grunde genommen darin, das Ausgangssignal eines Gatters G1 zum Eingang eines Gatters G2 zu übertragen. Diese Gatter sind Teile der Telemetriesignal-Regeneratoren TR1 bzw. TR2. Die Telemetrie-Signalkoppler selbst entsprechen in ihrem Aufbau in gewissem Umfange der Kombination aus einem Steuerfrequenzoszillator SBG und einem Steuerfrequenzempfänger SBE, wie sie in der Fig. 2 und zugehöriger Beschreibung der DE-OS 30 03 516 (entspricht der EP-A1-0 033 470) näher erläutert sind. Beim Sendeteil IS des Telemetrie-Signalkopplers handelt es sich ebenfalls um einen Oszillator, dessen Ausgangssignal über einen Übertrager Ü zu einem Empfangsteil IE übertragen wird. Der Sendeteil enthält einen ersten Transistor T1, dessen Basisanschluss über einen ersten Kondensator C1 und dessen Emitteranschluss direkt mit Bezugspotential verbunden sind. Der Kollektoranschluss dieses Transistors ist über einen zweiten Kondensator C2 mit Bezugspotential verbunden, ausserdem ist dieser Kollektoranschluss über einen ersten Widerstand R1 mit dem Ausgangsanschluss des ersten Gatters G1 und mit dem einen Anschluss einer Primärwicklung L1 des Übertragers Ü verbunden. Der andere Anschluss dieser Primärwicklung L1 ist an den Basisanschluss des Transistors T1 angekoppelt. Empfangsseitig enthält der Telemetrie-Signalkoppler einen zweiten Transistor T2, bei dem es sich im Gegensatz zum Transistor T1 um einen pnp-Transistor handelt, dessen Basisanschluss mit dem einen Anschluss der Sekundärwicklung L2 des Übertragers Ü verbunden ist. Der andere Anschluss der Sekundärwicklung L2 ist mit der Betriebsspannung U verbunden, an die über einen dritten Widerstand R3 auch der Emitter des Transistors T2 angeschlossen ist. Der Kollektor dieses Transistors ist über einen dritten Kondensator C3 und dazu parallel über einen vierten Widerstand R4 mit Bezugspotential und ausserdem direkt mit dem einen Eingang des zweiten Gatters G2 verbunden.

Durch den geschilderten Aufbau des Telemetrie-Signalkopplers wird eine Möglichkeit geschaffen, kapazitätsarm einen Teil des Telemetriesignals der einen Übertragungsrichtung trotz des hohen Potentialunterschiedes aufgrund der verwendeten Fernspeisung zum Regeneratur für die Gegenrichtung zu übertragen. Der einfache Aufbau des sendeseitigen Oszillators erfordert dabei nur einen geringen Betriebsstrom, der vom Gatter G1 zugeführt wird und gleichzeitig zur Einschaltung des Oszillators und damit des Telemetrie-Signalkopplers dient. Frequenzbestimmend für den Oszillator sind die Induktivität der Primärwicklung und die Kapazität der beiden Kondensatoren C1 und C2. Da der Empfänger nicht als Resonanzempfänger aufgebaut ist, ist die Schwingfrequenz des Oszillators in einem weiten Bereich wählbar, so dass auf Ableichelemente für diesen Oszillator verzichtet werden kann. Die Sekundärwicklung des mittels eines Ringkernes aufgebauten Übertragers Ü besteht aus wenigen Windungen und ist deshalb sowohl niederinduktiv als auch kapazitätsarm.

Anstelle des beschriebenen Telemetrie-Signalkopplers können auch bekannte Optokoppler verwendet werden. Diese Optokoppler mit empfangsseitigem Fotodiodenverstärker benötigen jedoch deutlich mehr Versorgungsleistung, so dass insbesondere bei digitalen Übertragungsstrecken mit grösserer Streckenlänge und entsprechend knapp kalkulierter Fernspeiseleistung die Verwendung des beschriebenen Telemetrie-Signalkopplers Vorteile bietet.

Weitere Vorteile des beschriebenen Telemetrie-Signalkopplers ergeben sich dadurch, dass die mögliche Übertragungskapazität so hoch ist, dass nicht nur die Zusatzinformation, sondern das gesamte Telemetriesignal von der einen Übertragungsrichtung zur Gegenrichtung übertragen werden kann. Dieses ist z.B. interessant für den Fall, dass an einem einzigen Ort die Auswertung der Telemetriesignale für beide Übertragungsrichtungen erfolgen soll.

**Patentansprüche**

1. Verfahren zur Betriebsüberwachung von Übertragungsstrecken für digitale Signale mit wenigstens einem, zwischen zwei Leitungsendgeräten angeordneten überwachenden Zwischengenerator, der eine Fehlerüberwachungseinrichtung für das übertragene digitale Signal und einen daran angeschlossenen Telemetriesignal-Regenerator zur Erzeugung eines die Überwachungsinformation zu einer Endstelle übertragenden Telemetriesignals enthält, bei dem die Telemetriesignale in einer anderen Frequenzlage als das digitale Signal in diesem Signalweg mitübertragen, in den Zwischenregeneratoren aber getrennt davon regeneriert und verstärkt werden, bei dem die Telemetriesignale von den einzelnen überwachenden Zwischenregeneratoren zyklisch aufeinanderfolgend abgegeben werden und die Aussendung jedes anschliessenden Telemetriesignals durch den Empfang des Telemetriesignals des vorhergehenden Zwischenregenerators ausgelöst wird und das bei Ausfall der Telemetriesignalübertragung der eine vorbestimmte Zeit kein Telemetriesignal empfangende Zwischenregenerator mit der Aussendung eines, eine Zusatzinformation enthaltenden Telemetriesignals beginnt, dadurch gekennzeichnet, dass jeweils wenigstens ein Teil des von einem überwachenden Zwischenregenerator der einen Übertragungsrichtung gebildeten Telemetriesignals an den in der gleichen Zwischenstelle angeordneten überwachenden Zwischenregenerator der anderen Übertragungsrichtung abgegeben und über den Telemetriesignalweg der Gegenrichtung zur auswertenden Endstelle übertragen wird.

2. Verfahren nach Patentanspruch 1, dadurch gekennzeichnet, dass nur derjenige Teil des Telemetriesignals, der nicht in den Telemetriesignalweg der Gegenrichtung eingespeist wurde, im Telemetriesignalweg der ursprünglichen Übertragungsrichtung vollständig übertragen wird.

3. Verfahren nach Patentanspruch 1 oder 2, dadurch gekennzeichnet, dass nur die Zusatzinformation vom erzeugenden Zwischenregenerator an einen in der gleichen Zwischenstelle enthaltenden Zwischenregenerator für die Gegenrichtung abgegeben wird.

4. Verfahren nach einem der Patentansprüche 1 bis 3, dadurch gekennzeichnet, dass die Zusatzinformation einen Hinweis auf denjenigen überwachenden Zwischenregenerator enthält, der bei einer Störung der Telemetriesignalübertragung mit der zyklischen Aussendung des Telemetriesignals beginnt.

5. Anordnung zur Durchführung eines Verfahrens zur Betriebsüberwachung entsprechend einem der Patentansprüche 1 bis 4 in einer Zwischenstelle einer Übertragungsstrecke für digitale Signale, die einen Telemetriesignal-Regenerator TR1 für die eine Übertragungsrichtung und einen zweiten Telemetriesignal-Regenerator TR2 für die Gegenrichtung enthält, dadurch gekennzeichnet, dass zur Verbindung der beiden Telemetriesignal-Regeneratoren (TR1, TR2) wenigstens ein Telemetrie-Signalkoppler (TS1, TS2) vorgesehen ist, dessen Sendeteil (IS1, IS2) an den Ausgangsanschluss eines in dem einen Telemetriesignal-Regenerator enthaltenen ersten Gatters (G1) und dessen Empfangsteil (IE1, IE2) an den Eingang eines zweiten, im anderen Telemetriesignal-Regenerator enthaltenen zweiten Gatters (G2) angeschlossen ist.

6. Anordnung nach Patentanspruch 5, dadurch gekennzeichnet, dass im Sendeteil des Telemetrie-Signalkopplers (TS1, TS2) ein, durch das Ausgangssignal des ersten Gatters (G1) ein- bzw. ausgeschalteter Oszillator vorgesehen ist, dessen Ausgang induktiv mit einem im Empfangsteil des Telemetrie-Signalkopplers enthaltenen Empfängers gekoppelt ist und dass der Ausgang des Empfängers mit einem Eingang des zweiten Gatters (G2) verbunden ist.

7. Anordnung nach Patentanspruch 5 oder 6, dadurch gekennzeichnet, dass der Telemetrie-Signalkoppler (TS1, TS2) sendeseitig einen ersten npn-Transistor (T1) enthält, dessen Basisanschluss über einen ersten Kondensator (C1) und dessen Emitteranschluss direkt mit einem ersten Bezugspotential (M1) verbunden sind, dass der Kollektoranschluss dieses Transistors über einen zweiten Kondensator (C2) mit dem ersten Bezugspotential (M1) und über einen ersten Widerstand (R1) mit dem Ausgangsanschluss eines im zugeordneten Telemetriesignal-Regenerators angeordneten ersten Gatters (G1) und ausserdem mit dem einen Anschluss einer Primärwicklung (L1) eines Übertragers (Ü) verbunden ist, dass der Basisanschluss dieses Transistors mit dem zweiten Anschluss der Primärwicklung (L1) verbunden ist, dass der eine Anschluss der Sekundärwicklung (L2) des Übertragers (Ü) mit dem Basisanschluss eines zweiten Transistors (T2) vom pnp-Typ verbunden ist, dessen Emitteranschluss über einen dritten Widerstand (R3) mit dem anderen Anschluss der Sekundärwicklung (L2) und mit Betriebsspannung (U) verbunden ist, dass der Kollektoranschluss dieses Transistors über einen dritten Kondensator (C3) und dazu parallel über einen vierten Widerstand (R4) mit einem zugeordneten zweiten Massepotential (M2) und ausserdem direkt mit dem einen Anschluss eines zweiten Gatters (G2), das sich im empfangenden Telemetriesignal-Regenerator befindet, verbunden ist.

8. Anordnung nach Patentanspruch 5, dadurch gekennzeichnet, dass als Telemetrie-Signalkoppler (TS1, TS2) Optokoppler vorgesehen sind.

## Revendications

1. Procédé pour la surveillance d'exploitation de voies de transmission pour signaux numériques, utilisant au moins un régénérateur intermédiaire de surveillance, disposé entre deux appareils d'extrémité de ligne, qui contient un dispositif de contrôle d'erreurs pour le signal numérique transmis et un régénérateur de signaux de télémétrie qui y est raccordé pour produire un signal de télémétrie transmettant l'information de surveillance à un point terminal, selon lequel les signaux de télémétrie sont transmis, dans une autre position en fréquence, conjointement avec le signal numérique dans le trajet de signal de celui-ci, mais sont régénérés et amplifiés séparément de ce signal dans les régénérateurs intermédiaires, selon lequel les signaux de télémétrie sont délivrés cycliquement l'un après l'autre par les différents régénérateurs intermédiaires de surveillance et l'émission de chaque signal de télémétrie suivant est déclenchée par la réception du signal de télémétrie du régénérateur intermédiaire précédent et selon lequel, en cas de défaillance de la transmission des signaux de télémétrie, le régénérateur intermédiaire qui ne reçoit pas de signal de télémétrie pendant un temps préfixé, commence par l'émission d'un signal de télémétrie contenant une information supplémentaire, caractérisé en ce qu'une partie au moins du signal de télémétrie formé par un régénérateur intermédiaire surveillance d'une direction de transmission, est délivrée chaque fois au régénérateur intermédiaire de surveillance de l'autre direction de transmission, installé au même point intermédiaire, et est transmise par le trajet des signaux de télémétrie de la direction opposée au point terminal d'exploitation.

2. Procédé selon la revendication 1, caractérisé en ce que seule le partie du signal de télémétrie non injectée dans le trajet de signal de télémétrie de la direction opposée est complètement transmise dans le trajet signal de télémétrie de la direction de transmission originale.

3. Procédé selon la revendication 1 ou 2, caractérisé en ce que seule l'information supplémentaire est délivrée par le régénérateur intermédiaire générateur au régénérateur intermédiaire pour la direction opposée, contenu dans le même point intermédiaire.

4. Procédé selon l'une des revendications 1 à 3, caractérisé en ce que l'information supplémentaire contient une indication concernant le régénérateur intermédiaire de surveillance qui, dans le cas d'une perturbation de la transmission des signaux de télémétrie, commence avec l'émission cyclique du signal de télémétrie.

5. Dispositif pour la mise en œuvre du procédé pour la surveillance d'exploitation selon une des revendications 1 à 4, dans un point intermédiaire d'une voie de transmission pour signaux numériques, qui contient un régénérateur du signal de télémétrie TR1 pour une direction de transmission et un second régénérateur du signal de télémétrie TR2 pour la direction opposée, caractérisé en ce qu'il comprend, pour relier les deux régénérateurs de signal de télémétrie (TR1, TR2), au moins un coupleur de signaux de télémétrie (TS1, TS2) dont la partie d'émission (IS1, IS2) est raccordée à la borne de sortie d'une première porte (G1) contenue dans un régénérateur du signal de télémétrie et dont la partie de réception (IE1, IE2) est raccordée à l'entrée d'une deuxième porte (G2) contenue dans l'autre régénérateur du signal de télémétrie.

6. Dispositif selon la revendication 5, caractérisé en ce que la partie d'émission du coupleur du signal de télémétrie (TS1, TS2) contient un oscillateur, mis en circuit ou arrêté par le signal de sortie de la première porte (G1), dont la sortie est couplée inductivement avec un récepteur contenu dans la partie de réception du coupleur du signal de télémétrie et que la sortie du récepteur est reliée à une entrée de la deuxième porte (G2).

7. Dispositif selon la revendication 5 ou 6, caractérisé en ce que le coupleur du signal de télémétrie (TS1, TS2) contient, côté émission, un premier transistor npn (T1) dont la borne de base est connectée à travers un premier condensateur (C1) et dont la borne d'émetteur est connectée directement à un premier potentiel de référence (M1), que la borne de collecteur de ce transistor est connectée à travers un second condensateur (C2) au premier potentiel de référence (M1) et à travers une première résistance (R1) à la borne de sortie d'une première porte (G1) disposée dans le régénérateur du signal de télémétrie coordonné et est connectée en outre à l'une des bornes d'un enroulement primaire (L1) d'un translateur (Ü), que la borne de base de ce transistor est connectée à la seconde borne de l'enroulement primaire (L1), que l'une des bornes de l'enroulement secondaire (L2) du translateur (Ü) est connectée à la borne de base d'un second transistor (T2) du type pnp, dont la borne d'émetteur est connectée à travers une troisième résistance (R3) à l'autre borne d'enroulement secondaire (L2) et à la tension de service (Ü) et que la borne de collecteur de ce transistor est connectée à travers un troisième condensateur (C3) et parallèlement à celui-ci à travers une quatrième résistance (R4) à un second potentiel de masse (M2) coordonné et en outre directement à une borne d'une deuxième porte (G2) qui se trouve dans le régénérateur du signal de télémétrie recevant.

8. Dispositif selon la revendication 5, caractérisé en ce que des optocoupleurs sont prévus comme coupleurs de signaux de télémétrie (TS1, TS2).

## Claims

1. A method of monitoring the operation of transmission links for digital signals, with at least one monitoring intermediate regenerator which is arranged between two line terminals and which includes a fault monitoring device for the transmitted digital signal and a telemetry signal regenerator which is connected thereto and which produces a telemetry signal which transfers the monitoring information to an end station, wherein the telemetry signals are co-transmitted in this signal path in a different frequency position to the digital signal, but are separately regenerated and amplified in the intermediate regenerators, where the telemetry signals are emitted from the individual, monitoring intermediate regenerators in a cyclic sequence and the transmission of each subsequent telemetry signal is triggered by the reception of the telemetry signal of the preceding intermediate regenerator and in the event of a breakdown in the telemetry signal transmission, when the intermediate regenerator has received no telemetry signal for a specific length of time it commences the transmisstion of a telemetry signal which contains an additional item of information, characterides in that at least a part of the telemetry signal formed by a monitoring intermediate regenerator of the one transmission direction is transmitted to the monitoring intermediate regenerator of the other transmission direction, which is arranged in the same intermediate station, and is transmitted via the telemetry signal path of the opposite direction to the analysing end station.

2. A method as claimed in patent claim 1, characterised in that only that part of the telemetry signal which has not been fed into the telemetry signal path of the opposite direction is completely transmitted in the telemetry signal path of the original transmission direction.

3. A method as claimed in patent claims 1 or 2, characterised in that only the additional information from the producing intermediate regenerator is transferred to an itermediate regenerator for the opposite direction which is included in the same intermediate station.

4. A method as claimed in one of the claims 1 to 3, characterised in that the additional information contains a reference to that monitoring intermediate regenerator which, in the event of a fault in the telemetry signal transmission, commences the cyclic transmission of the telemetry signal.

5. An arrangement for the implementation of a method for operation monitoring as claimed in one of the claims 1 to 4, in an intermediate station of a transmission link for digital signals which includes a telemetry signal regenerator TR1 for the one transmission direction and a second telemetry signal regenerator TR2 for the opposite direction, characterised in that for the connection of the two telemetry signal regenerators (TR1, TR2) there is provided at least one telemetry signal coupler (TS1, TS2) whose transmitting section (IS1, IS2) is connected to the output terminal of a first gate (G1) which is included in the first telemetry signal regenerator and whose receiving section (IE1, IE2) is connected to the input of a second gate (G2) which is included in the other telemetry signal regenerator.

6. An arrangement as claimed in patent claim 5, characterised in that in the transmitting section of the telemetry signal coupler (TS1, TS2) there is arranged an oscillator which is switched on and off by the output signal of the first gate (G1) and whose output is inductively coupled to a receiver included in the receiving section of the telemetry signal coupler, and that the output of the reciever is connected to an input of the second gate (G2).

7. An arrangement as claimed in claims 5 or 6, characterised in that at the transmitting end the telemetry signal coupler (TS1, TS2) includes a first npn-transistor (T1) whose base terminal is connected via a first capacitor (C1) and whose emitter terminal is connected directly to a first reference potential (M1), that the collector terminal of this transistor is connected via a second capacitor (C2) to the first reference potential (M1) and is connected via a first resistor (R1) to the output terminal of a first gate (G1) which is arranged in the assigned telemetry signal regenerator and is also connected to the first terminal of a primary winding (L1) of a transformer (Ü), that the base terminal of this transistor is connected to the second terminal of the primary winding (L1), that the first terminal of the secondary winding (L2) of the transformer (Ü) is connected to the base terminal of a second transistor (T2) of the pnp-type whose emitter terminal is connected via a third resistor (R3) to the other terminal of the secondary winding (L2) and to the operation voltage (U), that the collector terminal of this transistor is connected via a third capacitor (C3) and, in parallel therewith, via a fourth resistor (R4) to an assigned second earth potential (M2) and is also directly connected to the first terminal of a second gate (G2) which is arranged in the receiving telemetry signal regenerator.

8. An arrangement as claimed in claim 5, characterised in that opto-couplers are provided by way of telemetry signal couplers (TS1, TS2).

1/1

## FIG 1

## FIG 2